# FASCICULE DE BREVET EUROPEEN

(11) **EP 0 290 363 B1**
(45) Date de publication et mention de la délivrance du brevet: **19.01.1994**
(21) Numéro de dépôt: 88440035.9
(22) Date de dépôt: 06.05.1988
(51) Int. Cl.: B60D 1/00, B62D 13/02

(54) **Attelage court à géométrie variable pour remorques**
Kurze Anhängerkupplung mit verstellbarer Geometrie
Short trailer hitch with a variable geometry

(30) Priorité: 06.05.1987 FR 8706536
(43) Date de publication de la demande: 09.11.1988
(73) Titulaire: LOHR INDUSTRIE, 67980 Hangenbieten (FR)
(72) Inventeur: André, Jean-Luc, F-67310 Dangolsheim (FR)
(74) Mandataire: Metz, Paul

(56) Documents cités:
- EP-A- 0 176 442
- DE-A- 3 207 724
- DE-A- 3 321 950
- FR-A- 2 585 295
- US-A- 2 252 135
- US-A- 2 341 528
- US-A- 3 727 945

## Description

La présente invention se rapporte à un attelage court à géométrie variable pour remorques notamment celles du type à rond d'avant train ou à essieu avant directeur et celles du type à essieux centraux.

Le secteur technique visé par l'invention est celui des transports routiers et plus particulièrement des véhicules composés d'un tracteur simple ou porteur attelé à une remorque.

L'attelage court à géométrie variable selon l'invention se rapporte plus particulièrement à un véhicule porteur remorqueur relié à sa remorque par un attelage de longueur minimale variable en fonction du rayon de braquage de manière à rester dans les limites légales de longueur d'un convoi routier en ligne droite.

La longueur limite d'un convoi routier étant imposée par la réglementation routière, on ne peut que diminuer la longueur de l'attelage pour gagner en capacité de chargement.

Or, pour des raisons de sécurité, la longueur de la liaison articulée est elle-même limitée par la distance minimale possible entre la partie arrière du camion et le front avant de la remorque. En effet, le dégagement entre le camion et sa remorque doit être suffisant pour éviter les heurts des deux parties en correspondance aussi bien dans les virages où les arêtes d e coin de la remorque risquent de cogner la face arrière du camion, que dans les bosses ou les creux où le même risque est représenté par l'arête horizontale soit inférieure, soit supérieure, de la remorque.

Les divers constructeurs ont imaginé, pour augmenter la capacité en chargement de leurs convois routiers, diverses solutions techniques permettant de rendre variable la longueur de l'attelage d'une position rétractée en ligne droite permettant de satisfaire aux obligations légales à une position allongée en virage ou lors des manoeuvres pour assurer le libre débattement angulaire de la remorque, même dans le cas de courbes très prononcées.

Bien entendu, on vise dans la position rétractée, l'écartement minimal entre la remorque et la face arrière de la carrosserie du camion, de manière à gagner le plus possible en capacité de chargement.

Ce gain s'avère d'autant plus important qu'il permet de gagner une largeur complète de palette.

Parmi les diverses solutions imaginées par les constructeurs, on peut citer les brevets suivants. Le brevet européen n^{o} 31 596 déposé par la société Emil DOLL, le brevet européen n^{o} 33 873 déposé par la société MEIER, les brevets européens déposés par la société KASSBOHRER n^{o} 66 269 et 168 521, les brevets européens n^{o} 111 76O déposé par ORTHAUS et n^{o} 122 527 par KRONE, le brevet suisse n^{o} 57O 294 VETTER et le brevet français n^{o} 2 544 258 FREJAT.

Ces solutions antérieures concernent des timons mécaniques sous la forme de moyens de guidage à glissières de la timonerie dans une direction longitudinale et des moyens mécaniques conjugués pour déplacer le timon de l'arrière vers l'avant dans les courbes.

*Par exemple, le point d'attache du timon sur la remorque pourra coulisser le long d'une glissière droite comme dans le brevet DE 3 207 724 (HERMANN), ou courbe comme dans le brevet DE 3 321 950 (MULLER).*

*De manière générale,* ces moyens d'ajustement s'avèrent délicats et sensibles aux chocs. Il faut donc les protéger.

Par ailleurs, leur construction est onéreuse et ils favorisent la génération des mouvements de lacets en descente.

*Des exemples de réalisation de ce type sont décrits dans les brevets FR 2 585 295 et EP 176 442 (JEANSON).*

Par ailleurs, il existe actuellement dans le commerce des timons extensibles dits à commande active.

Selon ces ensembles, le timon est allongé par un dispositif pneumatique commandé par un détecteur de proximité avec ou sans contact. Le rapprochement de la remorque au-delà d'une distance minimale est ainsi détecté et actionne un dispositif pneumatique de poussée en extension de manière à éviter les heurts entre l'arrière du camion et la remorque. L'énergie nécessaire au déplacement d'allongement du timon est prélevée sur le réseau du camion ou fournie par un groupe auxiliaire indépendant.

Ce type de solution nécessite une réalisation complexe et onéreuse. De plus, elle est limitée par la géométrie du système et par la vitesse de réaction de l'ensemble hydraulique.

Les autres inconvénients de ces systèmes concernent le poids et l'encombrement.

*D'autre part, afin de conserver une distance minimale entre la remorque et le véhicule tracteur, on a imaginé d'associer le timon extensible à des appuis mobiles entre la face avant de la remorque et la face arrière du camion.*

*Une telle réalisation est décrite dans le brevet US n*^{*o*} *3,727,945 (PARKER). Dans cette réalisation, le timon est à orientation fixe par rapport à l'axe longitudinal de la remorque. Par ailleurs, la trajectoire en virage est imposée par le déplacement de deux pièces de coin haute et basse sur deux bandes transversales de roulement correspondantes prévues en regard à l'avant de la remorque.*

*Ces deux pièces de coin sont des moyens de roulement. Elles existent à l'extrémité de chaque arête de la face arrière du camion.*

*La trajectoire est engageante, car la remorque tourne au plus serré de la face arrière du camion, sans s'en dégager dans les virages.*

*Cette invention ne permet ni la réalisation d'une liaison à soufflet, ni le transport de charges en porte-à-faux par rapport à l'avant de la remorque ou à l'arrière du camion.*

*En effet, le dépassement possible en ligne droite viendrait se faire percuter dans les virages par les zones d'arêtes de coin de l'arrière du camion ou de l'avant de la remorque.*

La présente invention a pour but de remédier à ces inconvénients en proposant un attelage court à géométrie variable particulièrement simple et performant. A cet effet, elle se rapporte à un attelage court à géométrie variable pour remorques, notamment du type à rond d'avant train et à essieux centraux comprenant un timon extensible de longueur variable avec l'angle de virage, caractérisé en ce que l'on associe un moyen de rappel élastique permanent en position d'écartement minimal de la remorque vers le camion à deux appuis symétriques de butée et de pivotement de la face avant de la remorque contre la face arrière du camion au niveau de chaque coin autour d'un axe vertical situé le plus près possible de chaque coin pour obtenir, lors du pivotement en virage, une trajectoire dégageante de toute la face avant de la remorque.

Comme indiqué, l'attelage selon l'invention présente une grande supériorité et de nombreux avantages:
. gain de place important aussi bien pour le chargement en vrac que pour la charge en palettes ;
. sécurité totale au roulage en ligne droite comme dans les courbes ;
. meilleure stabilité dans les courbes ;
. la prise d'attelage à l'arrière du camion reste celle de type universel permettant au camion de tracter n'importe quelle remorque. De plus, dans la version à train avant directeur, on peut utiliser la remorque avec n'importe quel camion en utilisant le timon en position d'extension maximale ; la trajectoire en virage du coin de la remorque est dégageante car on tourne au plus court grâce au rappel élastique. Ainsi, à aucun moment, l'avant de la remorque ne vient chevaucher l'arrière du camion. De ce fait, le déplacement rotatif de l'extrémité en porte-à-faux du plan de charge lors de la prise des virages permet de faire dépasser la charge de la remorque au-dessus de l'espace d'écartement, avantage particulièrement important dans le cas de convois porte-voitures;
. possibilité d'adapter une liaison déformable par exemple du type soufflet qui permet d'assurer l'étanchéité et de se dispenser de portes de communication et de diminuer les turbulences ;
. les pièces d'articulation-butée assurent la garantie du maintien d'un espace minimal en ligne droite et du dégagement du coin selon la trajectoire la plus courte;
. sécurité absolue car la défaillance du vérin se traduirait simplement par un allongement du timon ;
. l'invention permet, en choisissant les valeurs optimales de positions du rond d'avant train et du crochet d'attelage, d'obtenir la trajectoire idéale en virage.

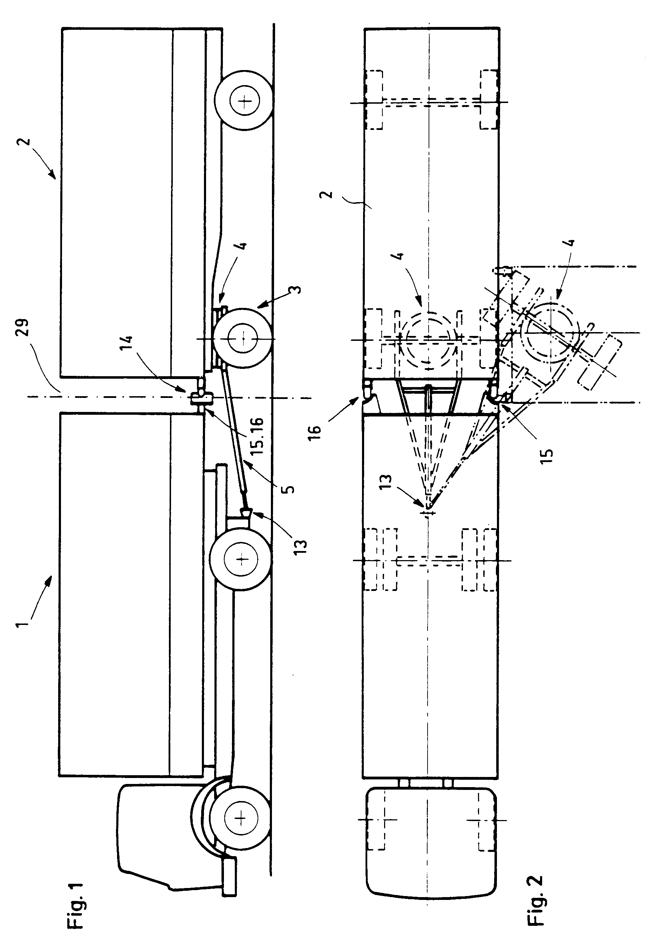

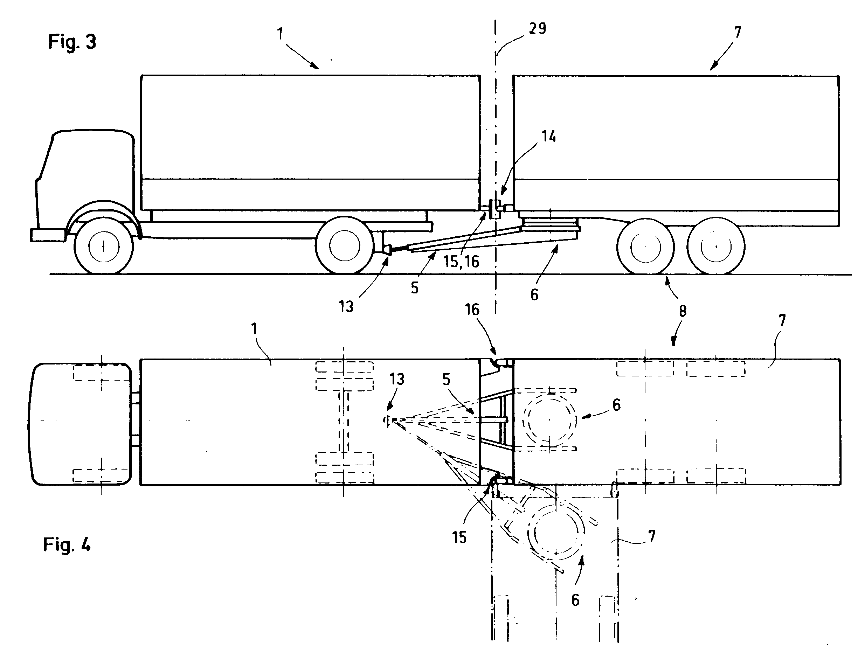

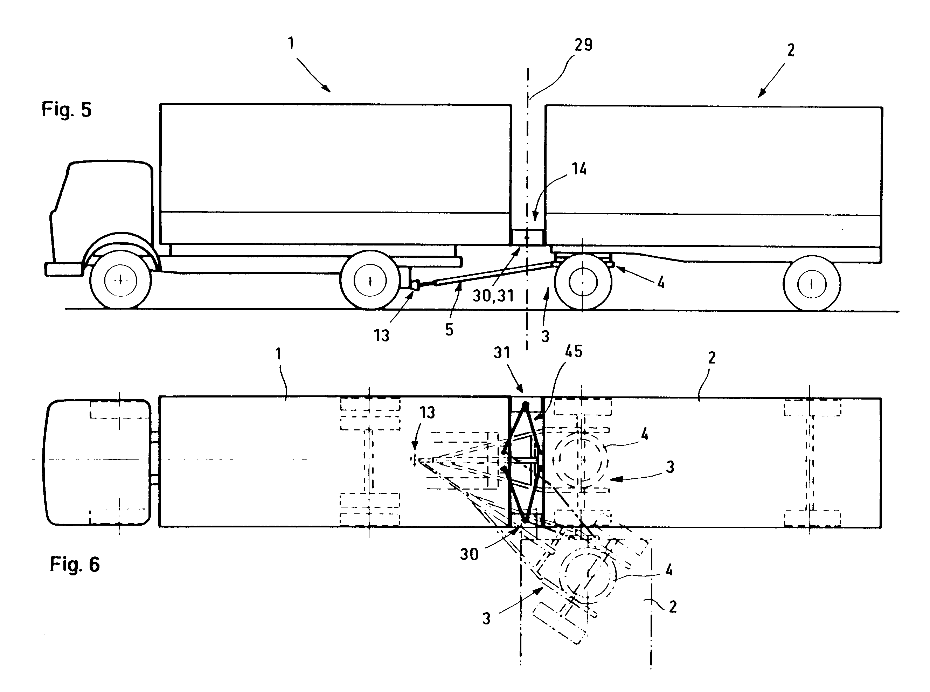

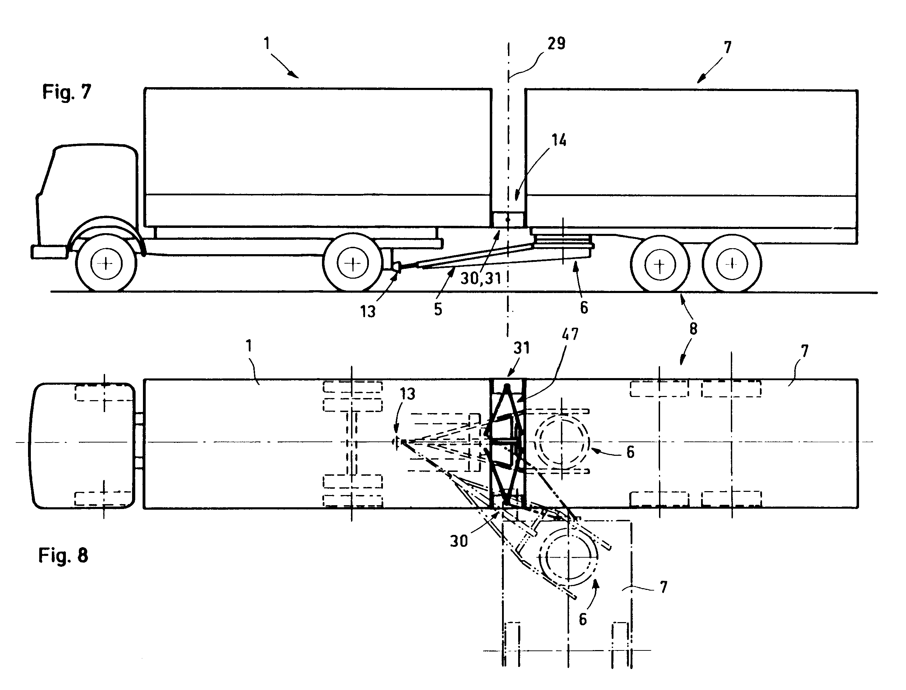

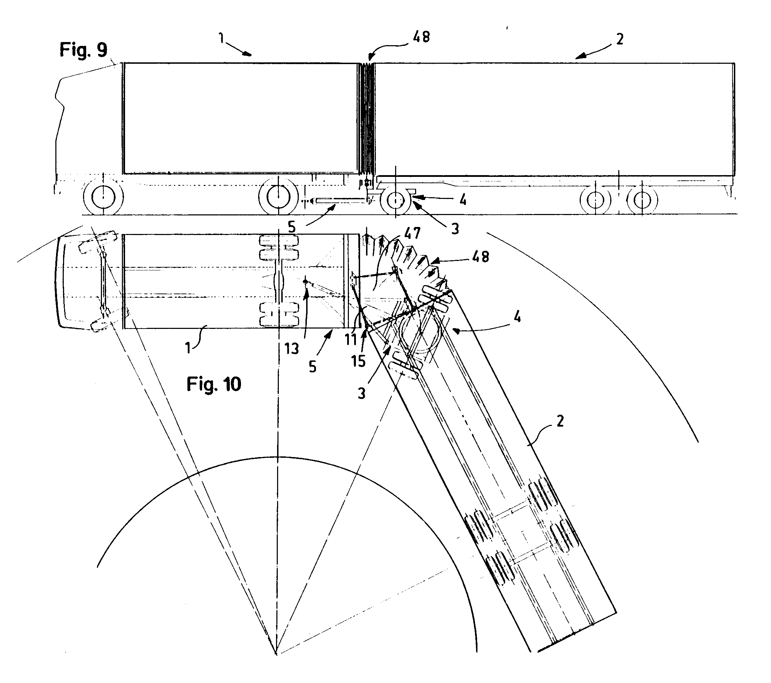

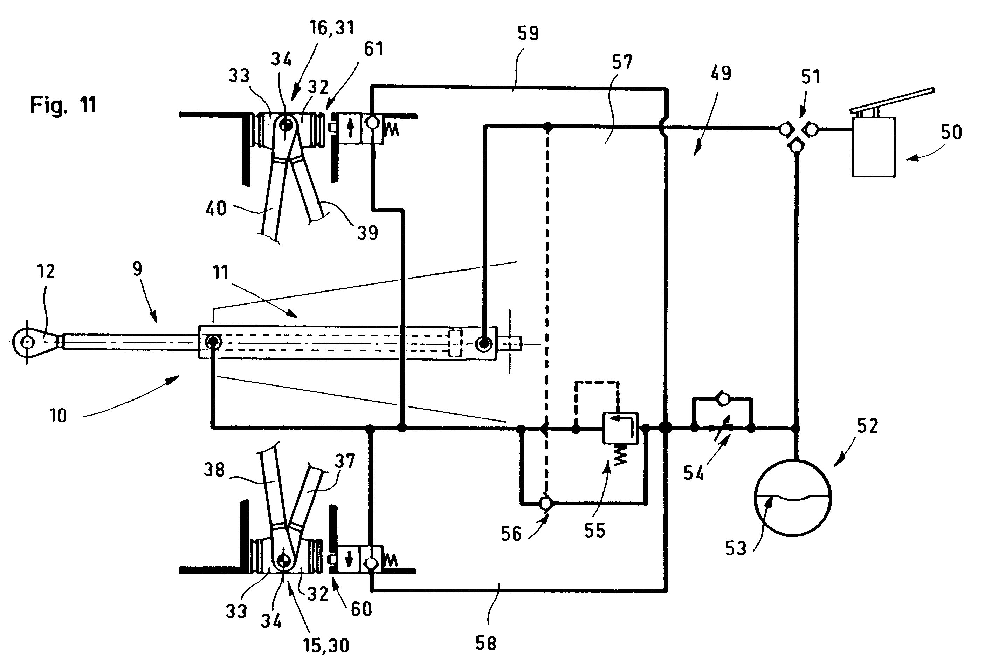

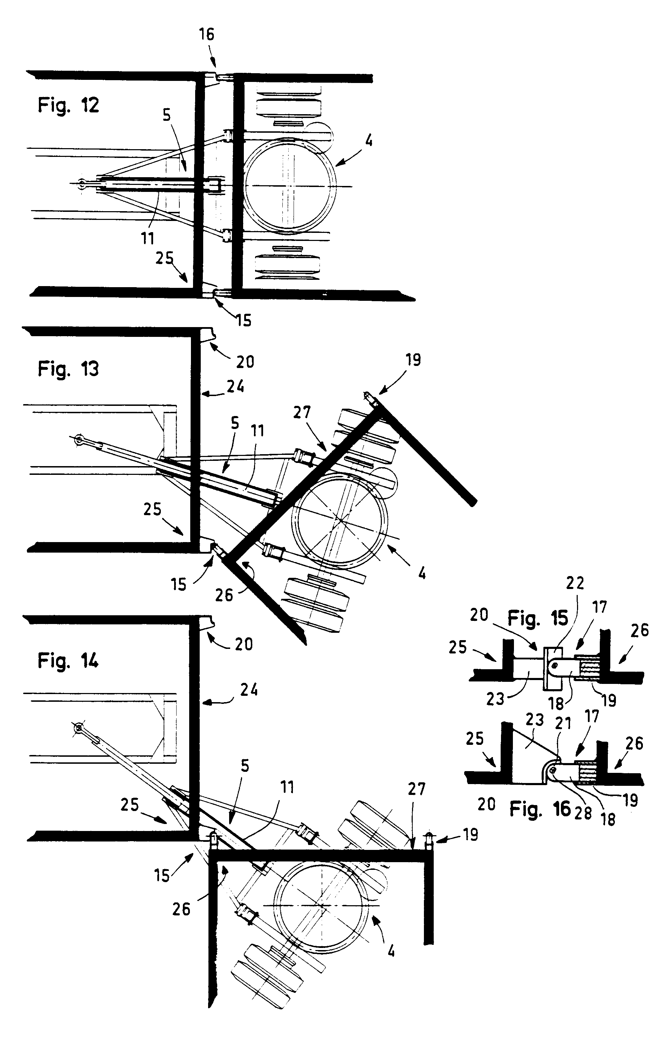

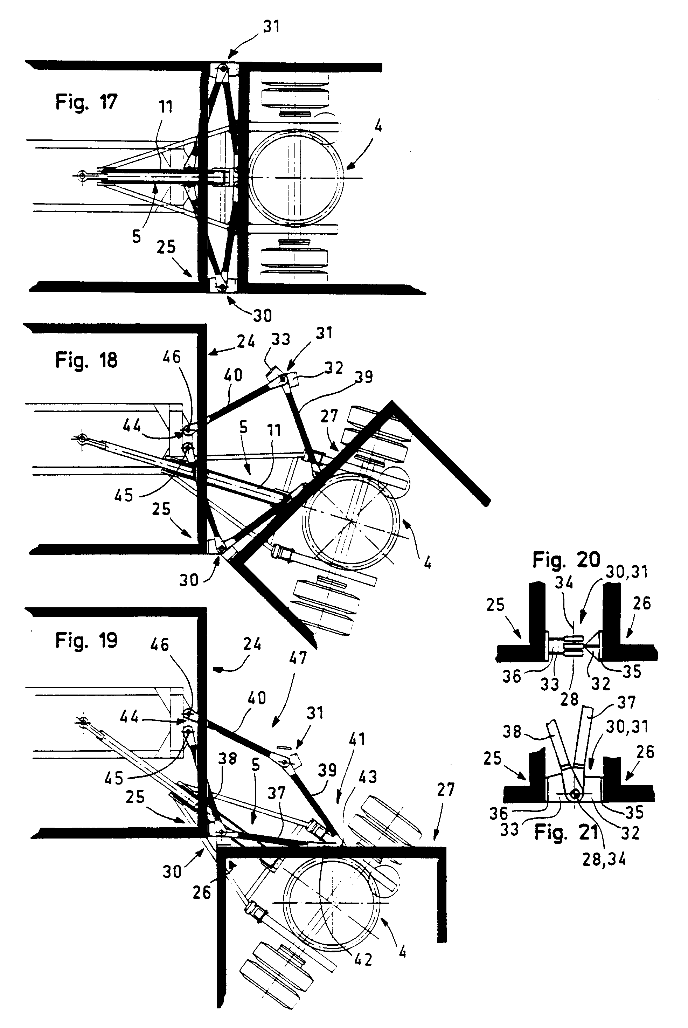

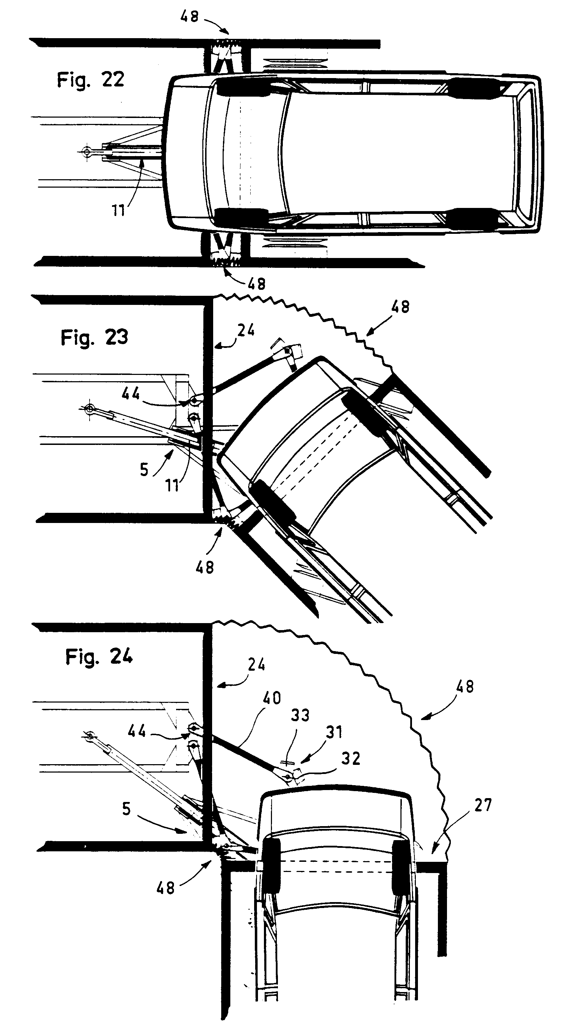

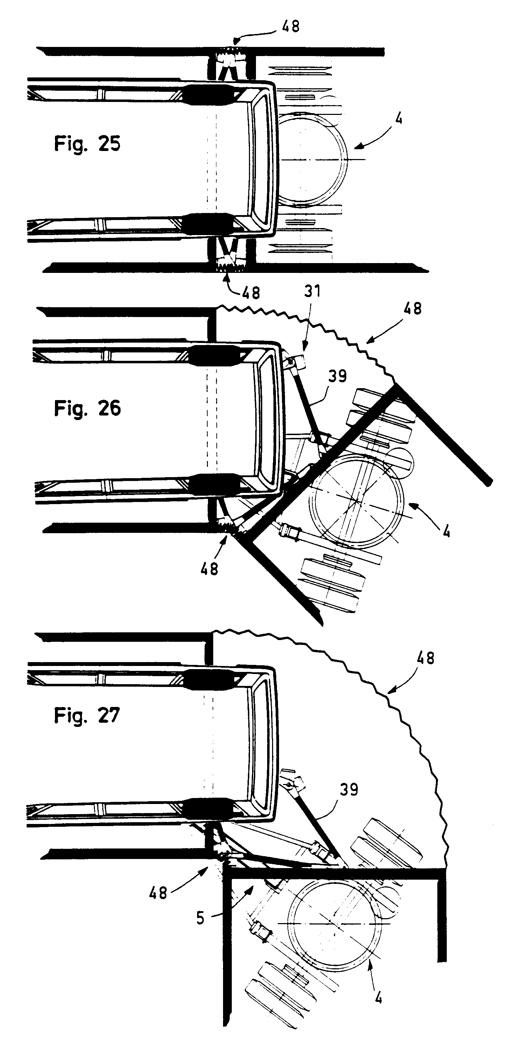

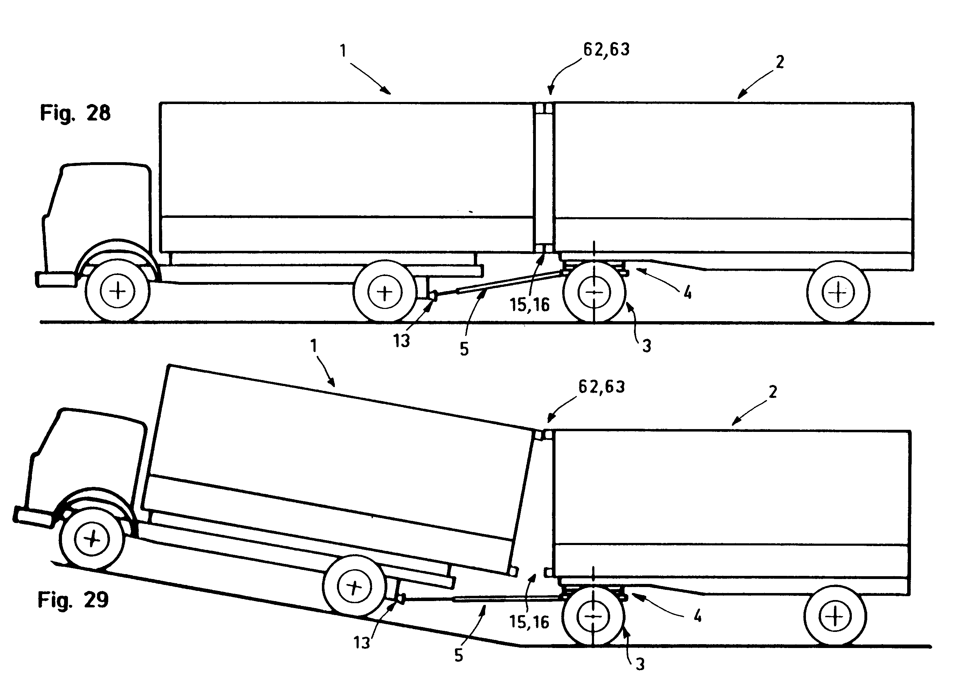

L'invention sera bien comprise à la lecture de la description qui suit, effectuée à titre d'exemple non limitatif sur un mode d'exécution en référence aux dessins accompagnants dans lesquels :
. Les figures 1 et 2 sont des vues respectivement de profil et en plan d'un convoi du type camion et remorque à rond d'avant train, équipé de l'attelage selon l'invention formé d'un timon extensible et de deux pièces dissociables de butée et d'articulation ;
. les figures 3 et 4 sont des vues respectivement de profil et en plan d'un convoi du type camion et remorque à essieux centraux équipés de l'attelage selon l'invention, formé d'un timon extensible et de deux pièces dissociables de butée et d'articulation ;
. les figures 5 et 6 sont des vues respectivement de profil et en plan d'un convoi du type camion et remorque à rond d'avant train, dont la liaison articulée est assurée par l'attelage selon l'invention formé d'un timon extensible et de deux pièces d'articulation et de butée portées par un cadre de bielles articulées;
. les figures 7 et 8 sont des vues respectivement de profil et en plan d'un convoi du type camion et remorque à essieux centraux dont la liaison articulée est assurée par l'attelage selon l'invention, formé d'un timon extensible et de deux pièces d'articulation et de butée portées par un cadre de bielles articulées ;
. la figure 9 est une vue de profil d'une variante à soufflet avec cadre de bielles articulées ;
. la figure 1O est une vue en plan de la même variante en configuration de virage ;
. la figure 11 est le schéma hydraulique du circuit de commande du vérin d'extension du timon avec représentation des détecteurs de contact ;
. les figures 12, 13 et 14 sont des vues schématiques en plan dans les deux positions limites de ligne droite et perpendiculaire et dans une position intermédiaire de virage dans le cas de deux pièces dissociables d'articulation et de butée ;
. les figures 15 et 16 sont des vues de détail respectivement de profil et en plan d'un exemple de réalisation d'une pièce dissociable d'articulation et de butée ;
. les figures 17, 18 et 19 sont des vues schématiques en plan dans les deux positions limites de ligne droite et perpendiculaire, et dans une position intermédiaire de virage dans le cas de deux pièces d'articulation et de butée reliées par cadre articulé ;
. les figures 2O et 21 et sont des vues de détail respectivement de profil et en plan d'un exemple de réalisation d'une pièce d'articulation et de butée ;
. les figures 22, 23 et 24 sont des vues schématiques en plan illustrant un premier exemple d'utilisation selon trois configurations de position avec charge en porte-à-faux du type voiture sortant de l'avant de la remorque ;
. les figures 25, 26 et 27 sont des vues schématiques en plan illustrant un deuxième exemple d'utilisation selon trois configurations de position avec charge en porte-à-faux du type voiture sortant de l'arrière du camion ;
. les figure 28 et 29 sont des vues de profil d'un convoi routier respectivement sur le plat et en creux d'une variante avec pièces supplémentaires d'articulation et de butée en partie haute.

On décrira l'invention à titre d'exemple ci-après par ses moyens généraux puis par ses moyens particuliers dans le cas de plusieurs variantes appliquées à une remorque à rond d'avant-train puis à une remorque semi-portée, par exemple à essieux centraux.

L'idée générale inventive consiste à utiliser un timon extensible contraint en rappel élastique permanent de la remorque vers le camion en position d'écartement minimal en association avec des moyens doubles d'appui, de butée, de maintien d'écartement sur une zone étroite de contact à proximité ou sur les arêtes verticales en regard du camion et la remorque et de pivotement autour d'un axe parallèle auxdites arêtes verticales. L'écartement minimal est donné par les pièces d'articulation et de butée.

Le timon est de préférence mais non exclusivement extensible par le même moyen assurant la force de rappel élastique. Celle-ci peut provenir, par exemple, d'un ressort métallique ou d'un ou de plusieurs liens à effet de rappel.

Le rappel élastique assure le maintien constant d'un écartement minimum déterminé par les moyens d'appui et de butée et la rotation s'effectue par appui de butée autour d'un axe parallèle à l'arête correspondante de coin de l'arrière du camion le plus près possible de cette arête pour obtenir une trajectoire dégageante de l'arête de coin opposée de la remorque lors des mouvements de pivotement dans les virages.

L'idée générale exposée ci-dessus est mise en oeuvre par les moyens généraux suivants, susceptibles de modifications évidentes ou mineures ou de substitutions par tous moyens équivalents, proches ou dérivés.

Un camion porteur remorqueur 1 tire une remorque 2 à train avant directeur 3 monté sur un rond d'avant-train 4 solidaire d'un timon extensible 5 susceptible de mouvements longitudinaux en rapprochement ou en éloignement du camion ou sur une couronne de pivotement 6 dans le cas d'une remorque 7 à essieux centraux 8. Cette couronne 6 constitue pour l'invention un parfait équivalent du rond d'avant-train 4.

Le timon est de type classique dont l'élément central 9 est constitué par un ensemble télescopique 1O actionné par un vérin de traction 11.

L'élément central 9 est terminé par une pièce en anneau 12 ou équivalent venant s'immobiliser sur un crochet d'attelage classique 13 ou équivalent.

Comme indiqué ci-dessus, le vérin 11 peut être dissocié de l'élément central 9 du timon.

Selon une autre variante élaborée on peut prévoir deux moyens distincts fonctionnant en parallèle l'un pour l'extension ou la rétraction du vérin, l'autre pour le rappel élastique permanent en position d'écartement minimal.

Le ou les moyens d'extension et/ou de rappel élastique permanent en position d'écartement minimum ci-dessus est et/ou sont associés à un ensemble double 14 de pièces d'articulation-butée symétriques indépendantes reliées ou non à l'avant de la remorque et à l'arrière du camion par une liaison articulée par exemple des bras symétriques articulés.

Ces pièces d'articulation-butée remplissent simultanément les fonctions de point ou de centre d'articulation et de maintien d'écartement minimal.

Il y a lieu de remarquer ici que, malgré la contrainte apportée par la rotation autour des coins par les pièces d'articulation-butée, il reste possible, en choisissant les valeurs optimales de positions du rond d'avant train et celles du crochet d'attelage, d'obtenir la trajectoire idéale en virage.

Les pièces d'articulations-butée sont réalisées sous différentes formes techniques. On distingue d'abord des pièces du type tamponnoir 15 et 16 utilisées dans la variante des figures 1, 2, 3 et 4 et représentées schématiquement en détail sur les figures 15 et 16. Il s'agit plus particulièrement d'une pièce mâle butoir 17 saillante, à extrémité 18 arrondie, par exemple semi-sphérique, montée coulissante dans un bloc amortisseur 19 solidaire de la remorque et d'une pièce femelle 2O solidaire de la face arrière camion à platine de réception 21 sous la forme d'un tronçon vertical incurvé concave 22 de hauteur suffisante pour permettre un débattement vertical correspondant aux variations de hauteur de l'extrémité 18 suite aux dénivellations et secousses liées au roulage sur les creux et bosses des irrégularités courantes du relief routier.

La platine incurvée 22 est portée par une plaque horizontale de raccordement 23 assurant sa liaison en partie basse avec la structure de la face arrière 24 du camion au niveau et à proximité de son arête verticale adjacente 25. Il en est de même pour la pièce mâle butoir
Une autre variante représentée sur les figures de 5 à 8 utilise des pièces d'articulation-butée pivotantes 3O et 31 représentées en détail sur les figures 2O et 21. Ces pièces se composent chacune de deux sabots 32 et 33 articulés entre eux par un axe de pivotement 34 traversant une chape et un tenon propre à chaque sabot faisant office de centre de rotation équivalent au centre 28 pouvant se déplacer sur l'axe 29.

Chaque sabot est garni d'une semelle 35 et 36 en matériau absorbant pour amortir les chocs et se trouvé monté solidaire des extrémités de bras articulés 37 et 38 traversées également par l'axe de pivotement 34 assurant la liaison avec le châssis du camion et celui de la remorque. Des bras articulés, par exemple identiques, 39 et 40 relient la pièce d'articulation-butée homologue 31, respectivement au châssis de la remorque et à celui du camion.

Les extrémités des bras 37 et 39 sont articulées par exemple sur une platine 41 sur la remorque en deux points d'articulation distincts 42 et 43.

Il en est de même pour les extrémités des bras 38 et 40 qui sont articulés sur une platine 44 sur le camion selon deux points d'articulation 45 et 46.

Les bras ainsi articulés constituent un véritable cadre déformable 47 qui permet de garantir la position du centre de rotation 28.

A cet effet, il est important d'observer que les bras 38 ou 40 et 37 ou 39 concernés, côté centre de rotation, ne bougent pas par rapport au camion ou à la remorque pendant toute la rotation, permettant ainsi de maintenir le centre de rotation 28 à sa place et de supporter la composante latérale de la force de rappel. Ceci ressort clairement des figures 18 et 19.

Bien entendu, diverses variations ou variantes peuvent être envisagées pour ces articulations.

Elles peuvent être confondues, réalisées sous la forme de rotules ou toutes autres formes analogues ou équivalentes remplissant les mêmes fonctions générales. Grâce au rappel permanent en position d'écartement minimum, le contact des sabots avec les faces adjacentes de l'arrière camion et de l'avant remorque est assuré pendant toute la rotation en virage pour garantir une trajectoire dégageante en virage de la face avant de la remorque.

La trajectoire au plus court rayon de courbure de l'extrémité de la remorque permet de réaliser la protection de l'intervalle entre le camion et la remorque sous la forme d'un soufflet 48 ou équivalent, comme représenté sur les figures 9 et 10.

On examinera maintenant la commande hydraulique du vérin et les différentes sécurités prévues en cas de défaillance de celui-ci ou d'une configuration anormale entre le camion et la remorque.

Il s'agit d'un circuit hydraulique fermé 49 dans lequel est injecté le fluide hydraulique sous pression par une pompe à main 50 ou équivalent à travers un coupleur hydraulique 51 vers un accumulateur oléopneumatique 52 à membrane 53 ou à piston.

Le circuit principal comprend le vérin 11 par exemple à double effet, un étrangleur 54 destiné à freiner le retour du fluide vers la chambre, côté tige du vérin 11, étrangleur shunté par un clapet anti-retour, un obturateur de pression 55 dont l'échappement est taré à un seuil de pression de sécurité, par exemple 250 bars. L'obturateur 55 est shunté par un clapet piloté 56 à partir de la conduite 57 alimentant la chambre du vérin côté extension du timon.

Deux circuits 58 et 59 comprenant des détecteurs de contact de butée 60 et 61 sont montés en parallèle sur l'obturateur de pression 55. Il s'agit de fins de course hydraulique à tiroir ou analogue fermant le circuit au repos.

Ils permettent, si le contact avec la remorque n'est plus assuré simultanément sur les deux pièces d'articulation-butée comme représenté, de forcer le passage du fluide à travers l'obturateur de pression 55 et, de ce fait, d'assurer par le vérin une résistance maximale à l'allongement jusqu'à la valeur de tarage maximum à partir de laquelle l'obturateur devient passant et constitue le retour direct à l'accumulateur.

On détermine ainsi une résistance maximale à l'allongement.

La pompe à main permet aussi la commande manuelle du vérin pour effectuer manuellement la dissociation de la liaison afin de procéder à l'ouverture des portes ou autre accès entre la remorque et le camion.

Pour des raisons de sécurité, on peut doubler le nombre de pièces d'articulation-butée avec ou sans liaison par cadre articulé. Ainsi, des pièces d'articulation-butée supplémentaires 62 et 63 en partie haute permettent d'éviter le choc des coins supérieurs du camion et de la remorque lors du passage dans des creux prononcés, comme représenté sur les figures 28 et 29 et, de ce fait, de permettre une réduction supplémentaire de l'écartement minimal par dégagement par le bas ou par le haut dans les creux ou dans les bosses.

Le fonctionnement s'avère simple. En ligne droite, le vérin de traction 11 tient en appui par la force de rappel qu'il développe, la remorque contre la face arrière du camion au travers des pièces d'articulation-butée.

Lors de la prise de courbes, la force permanente de rappel contraint la remorque contre le coin adjacent du camion à travers la pièce d'articulation-butée correspondante au niveau de laquelle s'effectue la rotation au plus court.

En faisant décrire à l'extrémité du plan de chargement la trajectoire à plus faible rayon de courbure, il devient possible de porter des charges en extension de porte-à-faux vers l'avant de la remorque qui viennent chevaucher sans dommage l'arrière du camion après la prise de virage (figures 22 à 24).

Il en est de même pour les charges en extension de porte-à-faux à l'arrière du camion (figures 25 à 27).

Cet avantage s'avère important dans le cas des véhicules porte-voitures pour lesquels une voiture supplémentaire peut ainsi entrer dans la longueur maximale autorisée.

Diverses modifications s'avèrent possibles dans le cadre de la présente invention, non seulement celles du domaine des équivalents mais aussi les variantes directes, simples ou évidentes.

## Revendications

1. Attelage court à géométrie variable pour remorques à timon libre en pivotement par rapport à l'axe longitudinal de la remorque, notamment remorques du type à train avant directeur, comprenant un timon extensible (5) de longueur variable avec l'angle de virage, caractérisé par l'association du timon extensible (5), libre en pivotement par rapport à l'axe longitudinal de la remorque, et monté en rappel permanent par un moyen de rappel élastique vers une position d'écartement minimal entre la remorque (2) ou (7) et l'arrière du camion (1), à deux moyens symétriques de butée-pivotement sur des zones fixes d'appui-pivotement de la face avant de la remorque contre la face arrière du camion, zones fixes d'appui-pivotement situées au niveau de chaque coin, et constituant chacune un centre de pivotement autour d'un axe vertical (29) de pivotement fixe pendant le virage, situé le plus près possible de chaque coin pour obtenir, lors du pivotement en virage, une trajectoire dégageante de toute la face avant de la remorque autour du coin adjacent de l'arrière du camion.

2. Attelage selon la revendication 1, caractérisé en ce que le moyen de rappel élastique permanent du timon en position d'écartement minimal est un vérin (11) relié au timon.

3. Attelage selon les revendications 1 et 2, caractérisé en ce que les moyens symétriques de butée-pivotement sont des pièces d'articulation-butée dissociables, présentes en partie basse des faces arrière et avant en correspondance respectivement du camion et de la remorque, pièces maintenues en contact l'une avec l'autre par le moyen de rappel élastique.

4. Attelage selon les revendications 1, 2 et 3, caractérisé en ce que les pièces d'articulation-butée sont du type tamponnoirs dissociables (15) et (16) constituées d'une pièce mâle butoir (17) à extrémité arrondie montée coulissante dans un bloc amortisseur (19) solidaire de la remorque et d'une pièce femelle (2O) à platine verticale de réception (21) incurvée et raccordée en correspondance à la face arrière du camion.

5. Attelage selon la revendication 4, caractérisé en ce que les pièces d'articulation-butée sont des blocs pivotants (3O) et (31) portés par un ensemble mécanique articulé.

6. Attelage selon la revendication 5, caractérisé en ce que les blocs pivotants (3O) et (31) sont deux sabots (32) et (33) articulés entre eux par un axe de pivotement (34) commun aux sabots et aux éléments de l'ensemble mécanique articulé et en ce que chaque sabot comprend une semelle garnie d'une pièce amortissante appelée à venir en contact avec les coins adjacents de faces arrière et avant du camion et de la remorque sur des zones d'appuis fixes symétriques de butée et de pivotement.

7. Attelage selon les revendications 5 et 6, caractérisé en ce que l'ensemble mécanique articulé se compose de deux paires de bras (37,38) et (39,4O) articulés séparément d'une part sur le camion et d'autre part sur la remorque et deux à deux sur l'axe commun (34) réalisant ainsi un cadre articulé.

8. Attelage selon les revendications précédentes, caractérisé en ce que le vérin (11) est alimenté à partir d'un accumulateur (52) à travers un obturateur de pression (55) à clapet piloté et en ce que deux détecteurs de contact de butée (60) et (61) commandant des tiroirs hydrauliques pour forcer le retour à travers l'obturateur de pression (55) sont prévus de part et d'autre à chaque point de butée sur la remorque ou le camion pour augmenter la réaction à l'allongement du vérin lors d'une dissociation simultanée occasionnelle des deux pièces d'articulation-butée.

9. Attelage selon les revendications précédentes caractérisé en ce que chacun des appuis symétriques de butée et de pivotement (62) et (63) est doublé par adjonction d'une pièce d'articulation-butée en partie haute des faces arrière et avant en correspondance du camion et de la remorque.

10. Attelage selon les revendications précédentes, caractérisé en ce que le passage entre l'arrière du camion et l'avant de la remorque est protégé par une liaison extensible.

## Claims

1. Short trailer hitch with variable geometry for trailers comprising a tow bar which pivots freely in relation to the longitudinal axis of the trailer, in particular trailers of the type comprising a steering front axle, comprising an extendable tow bar (5) of a length that is variable with the turning angle, characterised by the association of on one hand the extendable tow bar (5), which pivots freely in relation to the longitudinal axis of the trailer and is mounted in a state of continuous return to a position of minimum displacement between the trailer (2) or (7) and the rear of the lorry (1) by means of a resilient return means, with on the other hand two symmetrical pivot-stop means on the fixed pivot support of the front face of the trailer against the rear face of the lorry, which fixed pivot support areas are located in the vicinity of each corner, and each constitutes a centre of pivoting about a vertical pivot axis (29) which is fixed during turning and is located as close as possible to each corner in order to obtain, during pivoting whilst cornering, a releasing trajectory of the entire front face of the trailer about the adjacent corner of the rear of the lorry.

2. Trailer hitch according to Claim 1, characterised in that the resilient means for constantly returning the tow bar into the position of minimum displacement is a jack (11) connected to the tow bar.

3. Trailer hitch according to Claims 1 and 2, characterised in that the symmetrical pivot-stop means are separable articulation-stop parts, located in the lower part of the respective corresponding front and rear faces of the lorry and the trailer, parts that are retained in contact with one another by means of the resilient return means.

4. Trailer hitch according to Claims 1, 2 and 3, characterised in that the articulation stop parts are of the separable buffer (15) and (16) type consisting of a male buffer part (17) with a rounded end mounted in a sliding manner in a shock-absorbing block (19) which is integral with the trailer, and of a female part (20) with a vertical receiving plate (21) which is concave and is connected in a corresponding manner to the rear face of the lorry.

5. Trailer hitch according to claim 4, characterised in that the articulation stop parts are pivotable blocks (30) and (31) supported by an articulated mechanical assembly.

6. Trailer hitch according to Claim 5, characterised in that the pivotable blocks (30) and (31) are two shoes (32) and (33) articulated with respect to one another by a pivot shaft (34) which is common to the shoes and to the elements of the articulated mechanical assembly; and in that each shoe comprises a sole provided with a shock-absorbing piece which is to come into contact with the adjacent corners of the rear and front faces of the lorry and the trailer on the fixed symmetrical supporting zones for stopping and pivoting.

7. Trailer hitch according to Claims 5 and 6, characterised in that the articulated mechanical assembly is consisting of two pairs of arms (37, 38) and (39, 40) articulated separately on the one side on the lorry and on the other side on the trailer and in pairs on the common shaft (34), thus producing an articulated frame.

8. Trailer hitch according to any one of the preceding claims, characterised in that the jack (11) is supplied from an accumulator (52) through a pressure seal (55) comprising a controlled flap; and in that two stop contact detectors (60) and (61) which control hydraulic slide valves to force the pressure to return across the pressure seal (55) are provided on both sides of each stop point on the trailer or the lorry to increase the reaction to the extension of the jack during an occasional simultaneous separation of the two articulation stop parts.

9. Trailer hitch according to any one of the preceding claims, characterised in that each of the symmetrical stop and pivot supports (62) and (63) is reinforced by the addition of an articulation stop part in the upper part of the corresponding rear and front faces of the lorry and the trailer.

10. Trailer hitch according to any one of the preceding claims, characterised in that the gap between the rear of the lorry and the front of the trailer is protected by an extendable joint.

## Patentansprüche

1. Kurze Anhängerkupplung mit verstellbarer Geometrie für Anhänger mit einer bezüglich der Längsachse des Anhängers frei schwenkbaren Deichsel, insbesondere für Anhänger mit einer vorderen Lenkachse, mit einer je nach Schärfe einer Kurve längs verstellbaren Deichsel (5), gekennzeichnet durch
die Verbindung einer verstellbaren Deichsel (5), die bezüglich der Längsachse des Anhängers frei schwenkbar ist, und die mittels einer elastischen Rückstellvorrichtung permanent in eine Lage zurückgezogen wird, die einen minimalen Abstand zwischen dem Anhänger (2,7) und der Rückseite des Lastzuges (1) hat,
mit zwei symmetrischen Dreh-Anschlagvorrichtungen an festen Lager-Drehbereichen an der Vorderseite des Anhängers gegenüber der Rückseite des Lastzuges, wobei die festen Lager-Drehbereiche auf der Höhe jeder Ecke angeordnet sind, und wobei jede ein Drehzentrum um eine feste vertikale Drehachse (29) für die Kurvenfahrt ausbildet, wobei jede Drehachse (29) möglichst in der Nähe einer jeden Ecke angeordnet ist, um während des Drehvorgangs in einer Kurve einen freien Zwischenraum an der Vorderseite des Anhängers um die angrenzende Ecke der Rückseite des Lastzuges herum zu erhalten.

2. Anhängerkupplung nach Anspruch 1, dadurch gekennzeichnet, daß die Vorrichtung zum permanenten elastischen Rückziehen der Deichsel in eine Position minimalen Abstandes ein an der Deichsel festgelegter Hubzylinder (11) ist.

3. Anhängerkupplung nach Anspruch 1 und 2, dadurch gekennzeichnet, daß die symmetrischen Dreh-Anschlagvorrichtungen trennbare Gelenk-Anschlagteile sind, die im unteren Teil entsprechender Rück- bzw. Vorderseiten des Lastzugs bzw. Anhängers angeordnet sind, wobei die Teile miteinander mittels der elastischen Rückzugsvorrichtung in Kontakt gehalten werden.

4. Anhängerkupplung nach Anspruch 1, 2 und 3, dadurch gekennzeichnet, daß die Gelenk-Anschlagteile trennbare Puffer (15,16) sind, die aus einem Pufferdorn (17) mit einem abgerundeten Ende, welches gleitend in einem am Anhänger festgelegten Pufferblock (19) angeordnet ist, und aus einem Aufnahmeteil (20) mit einer gekrümmten und entsprechend an der Rückseite des Lastzuges befestigten vertikalen Aufnahmeplatte bestehen.

5. Anhängerkupplung nach Anspruch 4, dadurch gekennzeichnet, daß die Gelenk-Anschlagteile schwenkbare Blöcke (30,31) sind, welche durch eine mechanische Gelenkvorrichtung getragen werden.

6. Anhängerkupplung nach Anspruch 5, dadurch gekennzeichnet, daß die schwenkbaren Blöcke (30,31) zwei Schuhe (32,33) sind, die gegeneinander um eine den Schuhen und den Elementen der mechanischen Gelenkvorrichtung gemeinsame Drehachse (34) schwenkbar sind, und daß jeder Schuh eine mit einem Dämpfungsteil versehene Sohle aufweist, wobei das Dämpfungsteil dazu dient, mit den an der Rück- und Vorderseite des Lastzuges und des Anhängers an den festen symmetrischen Lager-Anschlag-Drehbereichen angrenzenden Ecken in Kontakt zu kommen.

7. Anhängerkupplung nach Anspruch 5 und 6, dadurch gekennzeichnet, daß sich die mechanische Gelenkvorrichtung aus zwei Armpaaren (37,38,39,40) zusammensetzt, die jeweils einerseits am Lastzug und andererseits am Anhänger und paarweise um die gemeinsame Achse schwenkbar sind und auf diese Weise einen Gelenkrahmen bilden.

8. Anhängerkupplung nach einem der vorangehenden Ansprüche, dadurch gekennzeichnet, daß der Hubzylinder (11) über ein Druckventil (55) mit einem ferngesteuerten Klappenventil von einem Druckspeicher (52) versorgt wird und daß zwei Anschlagsensoren (60,61) auf beiden Seiten an jedem Anschlag an dem Anhänger oder dem Lastzug vorgesehen sind, wobei die Sensoren hydraulische Schieber steuern, um über das Druckventil (55) eine Rückwärtsbewegung zu erzeugen, um die Wirkung gegen eine Hubverlängerung während einer gelegentlichen gleichzeitigen Trennung der zwei Gelenk-Anschlagteile zu vergrößern.

9. Anhängerkupplung nach einem der vorangehenden Ansprüche, dadurch gekennzeichnet, daß ein jedes symmetrische Anschlag- und Dreh-Lager (62,63) durch ein zusätzliches Gelenk-Anschlagteil im oberen Bereich der Rück- bzw. Vorderseite des Lastzuges bzw. des Anhängers verdoppelt ist.

10. Anhängerkupplung nach einem der vorangehenden Ansprüche, dadurch gekennzeichnet, daß der Zwischenraum zwischen der Rückseite des Lastzuges und der Vorderseite des Anhängers durch eine verlängerbare Verbindung geschützt ist.
